# EUROPEAN PATENT APPLICATION

(11) **EP 4 538 064 A1**
(43) Date of publication of application: **16.04.2025**
(21) Application number: 24198891.4
(22) Date of filing: 06.09.2024
(51) Int. Cl.: B60C 11/03

(54) **MOTORCYCLE TIRE**

(30) Priority: 12.10.2023 JP 2023176996
(71) Applicant: Sumitomo Rubber Industries, Ltd., Kobe-shi, Hyogo 651-0072 (JP)
(72) Inventor: ICHIRYU, Yutaka, Kobe-shi,, 651-0072 (JP)
(74) Representative: Manitz Finsterwald Patent- und Rechtsanwaltspartnerschaft mbB

(57) **Abstract**

Provided is a motorcycle tire that can improve uneven wear resistance while maintaining wet performance. A motorcycle tire 1 includes a tread portion 2. The tread portion 2 is provided with a plurality of first inclined grooves 3 which are open from a crown region Cr to a first tread end T1. Each first inclined groove 3 includes a first portion 7 in which a groove width W1 decreases from the crown region Cr toward the first tread end T1 side, and a second portion 8 in which the groove width W1 increases toward the first tread end T1, up to the first tread end T1.

## Description

### BACKGROUND OF THE INVENTION

### Field of the Invention

The present invention relates to a motorcycle tire.

### Background Art

Japanese Laid-Open Patent Publication No. 2022-161695 describes a motorcycle pneumatic tire including a tread portion that is provided with first grooves and second grooves having a smaller length in the tire circumferential direction than the first grooves. The first grooves each include a first inclined portion and a second inclined portion. The first inclined portion has a first end on a tread end side and extends so as to be inclined in a first tire circumferential direction, and the second inclined portion is connected to the first inclined portion and extends to a closed second end so as to be inclined in the first tire circumferential direction. The second grooves each extend so as to be inclined in the tire circumferential direction and have an inner end in the tire axial direction. The inner ends of the second grooves are located inward of the first ends and the second ends of the first grooves in the tire axial direction. Such a motorcycle pneumatic tire is expected to have an effect of improving drainage performance and wear resistance.

In recent years, it has been known to increase the groove widths of grooves in order to improve wet performance. However, merely increasing the groove widths of the grooves causes a problem that the amounts of slippage on tread surfaces respectively including a pair of groove edges extending in the longitudinal direction of the grooves are different and a large difference between the amounts of wear of both tread surfaces occurs (i.e., uneven wear occurs).

The present disclosure has been made in view of the above-described problem, and an object of the present invention is to provide a motorcycle tire that can improve uneven wear resistance while maintaining wet performance.

### SUMMARY OF THE INVENTION

The present invention is directed to a motorcycle tire including a tread portion, wherein the tread portion is provided with a plurality of first inclined grooves which are open from a crown region including a tire equator to a first tread end, and each of the plurality of first inclined grooves includes a first portion in which a groove width decreases from the crown region toward the first tread end side, and a second portion in which the groove width increases toward the first tread end, up to the first tread end.

As a result of adopting the above configuration, the motorcycle tire of the present invention can improve uneven wear resistance while maintaining wet performance.

### BRIEF DESCRIPTION OF THE DRAWINGS

FIG. 1 is a development view of a tread portion of a motorcycle tire showing one embodiment of the present invention;
FIG. 2 is a plan view of a first inclined groove;
FIG. 3 is a plan view of the first inclined groove;
FIG. 4 is a cross-sectional view taken along a line A-A in FIG. 2;
FIG. 5 is a development view of the tread portion of the embodiment;
FIG. 6 is a plan view of a circumferential groove;
FIG. 7(A) is a cross-sectional view taken along a line B-B in FIG. 6;
FIG. 7(B) is a cross-sectional view taken along a line C-C in FIG. 6;
FIG. 8(A) is a cross-sectional view taken along a line D-D in FIG. 6;
FIG. 8(B) is a cross-sectional view of another embodiment of FIG. 8A;
FIG. 9(A) is a cross-sectional view taken along a line E-E in FIG. 6;
FIG. 9(B) is a cross-sectional view taken along a line F-F in FIG. 6;
FIG. 10(A) is a cross-sectional view taken along a line G-G in FIG. 6;
FIG. 10(B) is a cross-sectional view taken along a line H-H in FIG. 6; and
FIG. 11 is a plan view of a first small inclined groove.

### DETAILED DESCRIPTION

Hereinafter, an embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

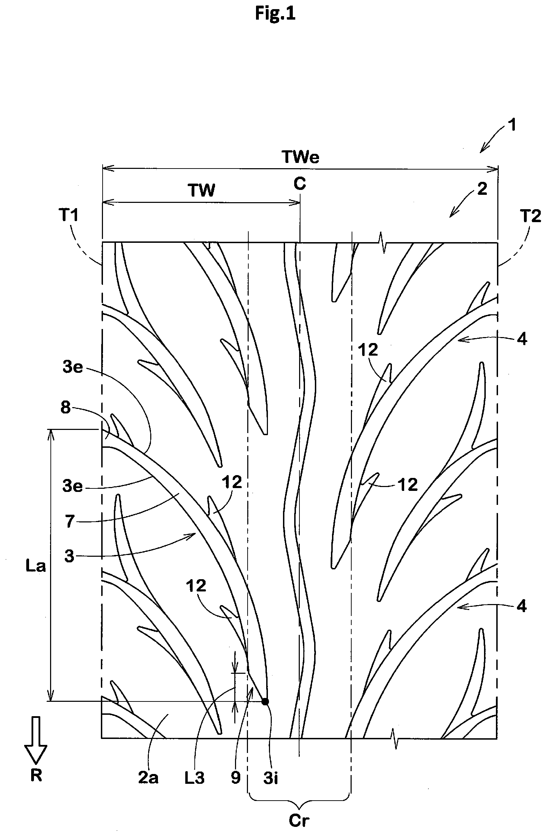

FIG. 1 is a development view of a tread portion 2 of a motorcycle tire (hereinafter sometimes referred to as "tire") 1 showing one embodiment of the present invention. The present invention is used for tires for so-called commuter motorcycles, which are intended for use in urban use (for which comfort and safety are regarded as more important than speed). Such tires mainly have a large opportunity to run at small camber angles. The present invention is also suitably used for bias tires in which carcass cords of a carcass (not shown) extend at an angle of 20 to 60 degrees with respect to the tire circumferential direction.

As shown in FIG. 1, the tread portion 2 is provided with a crown region Cr including a tire equator C and a plurality of first inclined grooves 3 which are open from the crown region Cr to a first tread end T1. In addition, the tread portion 2 of the present embodiment is provided with a plurality of second inclined grooves 4 which are open from the crown region Cr to a second tread end T2. Each second inclined groove 4 of the present embodiment has a shape that is line-symmetrical with the first inclined groove 3, when the first inclined groove 3 is moved by an arbitrary distance in the tire circumferential direction and the tire equator C is used as the axis of symmetry. Therefore, in the present specification, the first inclined grooves 3 will be described as a representative, and for the second inclined grooves 4, the configuration different from that of the first inclined grooves 3 will be described.

The first tread end T1 and the second tread end T2 are ends forming a maximum tread width. In the case where the tire 1 has a maximum tread width equal to the total width (maximum width) of the tire 1, the first tread end T1 and the second tread end T2 are the outer ends of the tire 1 in the tire axial direction. In the case where the tire 1 has a maximum tread width smaller than the total width of the tire 1, the first tread end T1 and the second tread end T2 are both ends in the tire axial direction that are in contact with a flat surface when a standardized load is applied to the tire 1 in a standardized state and the tire 1 is brought into contact with the flat surface while being tilted to both sides in the tire axial direction at a camber angle of 30 degrees. The length along the tread surface 2a of the tread portion 2 between the first tread end T1 and the second tread end T2 is a tread development width TWe. In addition, 50% of the tread development width TWe is a tread development half width TW. The center in the tire axial direction between the first tread end T1 and the second tread end T2 is the tire equator C. In the present specification, unless otherwise specified, dimensions and the like of components of the tire 1 are values measured in the standardized state.

In the present embodiment, the crown region Cr is a region that is in contact with a flat surface when the standardized load is applied to the tire 1 in the standardized state and the tire 1 is brought into contact with the flat surface at a camber angle of 0 degrees, and is a region that is in contact with the ground mainly during straight running. The "standardized state" is a state where the tire 1 is fitted on a standardized rim (not shown) and adjusted to have a standardized internal pressure and no load is applied to the tire 1. The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. If there is a standard system including a standard on which the tire 1 is based, the "standardized rim" is a rim that is defined for each tire by the standard, and is, for example, the "standard rim" in the JATMA standard, the "Design Rim" in the TRA standard, or the "Measuring Rim" in the ETRTO standard. If there is a standard system including a standard on which the tire 1 is based, the "standardized internal pressure" is an air pressure that is defined for each tire by the standard, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

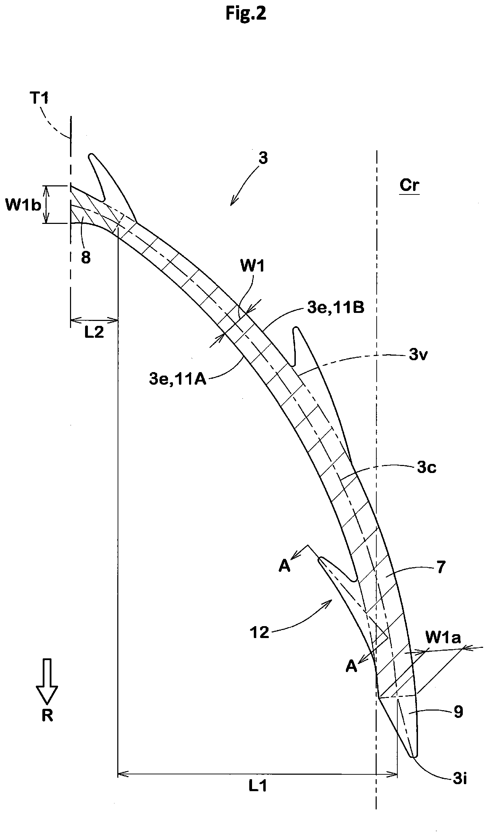

FIG. 2 is a plan view of the first inclined groove 3. As shown in FIG. 2, each of the plurality of first inclined grooves 3 includes a first portion 7 in which a groove width W1 decreases from the crown region Cr toward the first tread end T1 side, and a second portion 8 in which the groove width W1 increases toward the first tread end T1, up to the first tread end T1. Generally, the tread portion 2 has a profile (not shown) curved in an arc shape that is convex outward in the tire radial direction (not shown). Therefore, in the motorcycle tire 1, the amount of slippage during running tends to be larger on the first tread end T1 side with respect to the crown region Cr in the tread surface 2a. In addition, on a slippery wet road surface, cornering at a large camber angle tends to be restricted. Accordingly, the first portion 7 in which the groove width W1 decreases toward the first tread end T1 side reduces the amount of slippage on the outer side in the tire axial direction, where the amount of slippage tends to be larger, and decreases the difference between the amounts of wear occurring at the tread surface 2a on both sides in the groove width direction of the first portion 7, thereby improving uneven wear resistance. During running on a wet road surface where the camber angle becomes smaller, a decrease in the groove width W1 of the first inclined groove 3 is suppressed in the region in contact with the road surface, so that wet performance can be maintained. In addition, the second portion 8 makes drainage from the first tread end T1 smooth, so that wet performance can be maintained. Therefore, the tire 1 of the present invention can improve uneven wear resistance while maintaining wet performance.

The groove width W1 is a length in a direction orthogonal to a groove center line 3c of the first inclined groove 3. In addition, in the case where a groove having a smaller groove depth than the first inclined groove 3, a slit, or the like is connected to the first inclined groove 3, the groove width W1 is measured at a virtual groove edge 3v obtained by filling the smaller groove, the slit, or the like, at the location where the smaller groove, the slit, or the like is formed. In FIG. 2, for convenience, the first portion 7 and the second portion 8 are shown by hatching with different directions. The virtual groove edge 3v is shown by an alternate long and two short dashes line.

A length L1 in the tire axial direction of the first portion 7 is preferably not less than 50% and further preferably not less than 55% of the tread development half width TW, and is preferably not greater than 75% and further preferably not greater than 70% of the tread development half width TW. Since the length L1 of the first portion 7 is not less than 50% of the tread development half width TW, an effect of improving uneven wear resistance is exhibited. Since the length L1 of the first portion 7 is not greater than 75% of the tread development half width TW, an excessive decrease in flow of water in the first inclined groove 3 is suppressed.

A length L2 in the tire axial direction of the second portion 8 is preferably not less than 5% and further preferably not less than 7% of the tread development half width TW, and is preferably not greater than 15% and further preferably not greater than 13% of the tread development half width TW. Since the length L2 of the second portion 8 is not less than 5% of the tread development half width TW, smooth drainage is enabled. Since the length L2 of the second portion 8 is not greater than 15% of the tread development half width TW, an excessive decrease in the stiffness around the first tread end T1 is suppressed, and the amount of slippage is inhibited from becoming excessively large.

In order to improve uneven wear resistance while maintaining wet performance, a maximum value W1a of the groove width W1 of the first portion 7 is preferably not less than 5% and further preferably not less than 7% of the tread development half width TW, and is preferably not greater than 15% and further preferably not greater than 13% of the tread development half width TW. In addition, a maximum value W1b of the groove width W1 of the second portion 8 is preferably not less than 80% and further preferably not less than 90% of the maximum value W1a of the groove width W1 of the first portion 7, and is preferably not greater than 120% and further preferably not greater than 110% of the maximum value W1a.

As shown in FIG. 1 and FIG. 2, the tread portion 2 of the present embodiment has a designated tire rotation direction R. The tread portion 2 comes into contact with a road surface from the lower side toward the upper side in the drawing.

Each of the plurality of first inclined grooves 3 extends toward the first tread end T1 side while extending toward the trailing edge side in the tire rotation direction R. Each first inclined groove 3 continuously extends to the first tread end T1 while extending toward the trailing edge side in the tire rotation direction R. The first inclined groove 3 is formed, for example, in a curved shape that is convex on the trailing edge side in the tire rotation direction R.

Each of the plurality of first inclined grooves 3 includes a pair of groove edges 3e extending in the longitudinal direction of the first inclined groove 3, and an inner end 3i in the tire axial direction. Each first inclined groove 3 includes a tapered portion 9 in which the pair of groove edges 3e of the first inclined groove 3 extend in a tapered shape toward the inner end 3i. Such a tapered portion 9 can smoothly guide a water film on the tread surface 2a into the first inclined groove 3. A length L3 in the tire circumferential direction of each tapered portion 9 is preferably not less than 5% and further preferably not less than 7% of a length La in the tire circumferential direction of the first inclined groove 3, and is preferably not greater than 13% and further preferably not greater than 11% of the length La. Each tapered portion 9 of the present embodiment is connected to the first portion 7.

The pair of groove edges 3e include a leading-edge-side inclined groove edge 11A located on the leading edge side in the tire rotation direction R, and a trailing-edge-side inclined groove edge 11B located on the trailing edge side in the tire rotation direction R. In the present specification, the leading-edge-side inclined groove edge 11A and the trailing-edge-side inclined groove edge 11B each include the virtual groove edge 3v and extend continuously between the inner end 3i and the first tread end T1.

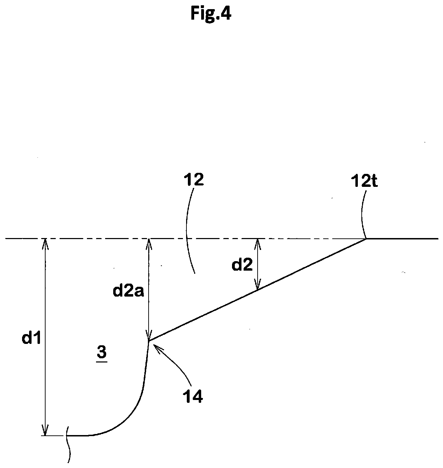

The tread portion 2 includes at least one shallow groove 12 connected to each first inclined groove 3. Such a shallow groove 12 removes a water film on the tread surface 2a to enhance contactability with a road surface, and also suppresses a decrease in the stiffness of the tread portion 2, so that wet performance is improved and uneven wear resistance is maintained high. The shallow groove 12 is formed with a groove depth d2 (shown in FIG. 4) smaller than a groove depth d1 of the first inclined groove 3.

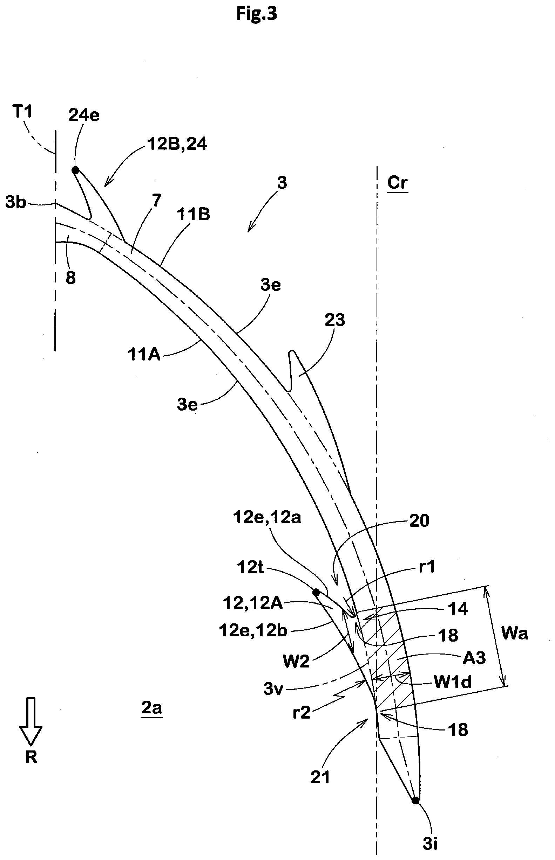

FIG. 3 is a plan view of the first inclined groove 3. As shown in FIG. 3, the shallow groove 12 includes an opening 14 connected to the first inclined groove 3. Water in the shallow groove 12 flows through the opening 14 into the first inclined groove 3 and is drained to the outside of the tread surface 2a during running. The opening 14 is at a position overlapping the virtual groove edge 3v.

The shallow groove 12 includes a pair of groove edges 12e connected to the groove edge 3e of the first inclined groove 3. In the present embodiment, at least one of the pair of groove edges 12e is formed in a curved shape that is convex on the trailing edge side in the tire rotation direction R.

Each of the pair of groove edges 12e of the shallow groove 12 is connected to the groove edge 3e of the first inclined groove 3 by an arc 18, for example. Accordingly, the load applied to the portion where the first inclined groove 3 and the shallow groove 12 are connected is distributed, so that uneven wear resistance is improved. In the present embodiment, the opening 14 is formed between each arc 18.

The tread surface 2a of the tread portion 2 includes an acute angle portion 20 sandwiched between one of the groove edges 3e of the first inclined groove 3 and one of the pair of groove edges 12e of the shallow groove 12. In addition, the tread surface 2a of the tread portion 2 includes an obtuse angle portion 21 sandwiched between one of the groove edges 3e of the first inclined groove 3 and one of the pair of groove edges 12e of the shallow groove 12. At the acute angle portion 20, a radius of curvature r1 of the arc 18 is preferably not less than 0.5 mm and further preferably not less than 0.7 mm. Since the radius of curvature r1 is not less than 0.5 mm, uneven wear resistance can be improved. The upper limit value of the radius of curvature r1 of the arc 18 is not particularly limited, and is preferably not greater than 1.5 mm and further preferably not greater than 1.3 mm in consideration of appearance of the pattern design. In addition, at the obtuse angle portion 21, a radius of curvature r2 of the arc 18 is preferably not less than 20 mm and further preferably not less than 30 mm, and is preferably not greater than 100 mm and further preferably not greater than 90 mm.

The shallow groove 12 extends from the opening 14 toward the first tread end T1 side while extending toward the trailing edge side in the tire rotation direction R. In other words, the pair of groove edges 12e extend from the arc 18 toward the first tread end T1 side while extending toward the trailing edge side in the tire rotation direction R. Such a shallow groove 12 relatively decreases the amount of slippage during running, thereby improving uneven wear resistance. Such a shallow groove 12 also distributes and reduces the load generated around the first inclined groove 3, thereby improving uneven wear resistance. In the present embodiment, the shallow groove 12 has one end 12t terminating at the position on the most trailing edge side in the tire rotation direction R.

In the present embodiment, the pair of groove edges 12e include a first groove edge 12a located on the trailing edge side in the tire rotation direction R, and a second groove edge 12b located on the leading edge side in the tire rotation direction R. In the present embodiment, the first groove edge 12a defines the acute angle portion 20. In other words, the acute angle portion 20 is located on the trailing edge side in the tire rotation direction R with respect to the shallow groove 12. In addition, the second groove edge 12b defines the obtuse angle portion 21. In other words, the obtuse angle portion 21 is located on the leading edge side in the tire rotation direction R with respect to the shallow groove 12. Accordingly, the above-described effect of relatively decreasing the amount of slippage during running is effectively exhibited.

The shallow groove 12 has a groove width W2 parallel to an opening width Wa of the opening 14. The groove width W2 of the shallow groove 12, for example, decreases with increasing distance from the first inclined groove 3. Accordingly, an excessive decrease in the stiffness of the tread portion 2 (tread surface 2a) is suppressed. In the present specification, the "increasing distance from the first inclined groove 3" is in a direction orthogonal to the opening width Wa.

FIG. 4 is a cross-sectional view taken along a line A-A in FIG. 2. As shown in FIG. 4, the groove depth d2 of the shallow groove 12 decreases with increasing distance from the first inclined groove 3. Accordingly, an excessive decrease in the stiffness of the tread surface 2a is suppressed. The groove depth d2 of the shallow groove 12 is maximum at the opening 14 and minimum at the one end 12t.

A maximum groove depth d2a of the shallow groove 12 is preferably not less than 0.3 times and further preferably not less than 0.4 times the groove depth d1 of the first inclined groove 3 at the position of the opening 14, and is preferably not greater than 0.7 times and further preferably not greater than 0.6 times the groove depth d1 of the first inclined groove 3. Since the maximum groove depth d2a of the shallow groove 12 is not less than 0.3 times the groove depth d1 of the first inclined groove 3, an effect of improving wet performance is exhibited. Since the maximum groove depth d2a of the shallow groove 12 is not greater than 0.7 times the groove depth d1 of the first inclined groove 3, an excessive decrease in the stiffness of the tread portion 2 is suppressed. In the present specification, the first inclined groove 3 at the position of the opening 14 is a region A3 where the first inclined groove 3 intersects a line segment orthogonal to the opening width Wa passing between the pair of groove edges 12e of the shallow groove 12. In FIG. 3, for convenience, the region A3 is shown by hatching.

As shown in FIG. 3, the opening width Wa is preferably not less than 1.0 times and further preferably not less than 1.5 times a groove width W1d of the first inclined groove 3 at the position of the opening 14 (region A3), and is preferably not greater than 4.0 times and further preferably not greater than 3.5 times the groove width W1d of the first inclined groove 3. Since the opening width Wa is not less than 1.0 times the groove width W1d of the first inclined groove 3, an effect of improving wet performance is exhibited. Since the opening width Wa is not greater than 4.0 times the groove width W1d of the first inclined groove 3, an excessive decrease in the stiffness of the tread portion 2 is suppressed.

In the present embodiment, the shallow groove 12 includes a first shallow groove 12A connected to the leading-edge-side inclined groove edge 11A, and a second shallow groove 12B connected to the trailing-edge-side inclined groove edge 11B. In the present embodiment, the first shallow groove 12A is located on the inner end 3i side (leading edge side in the tire rotation direction R) with respect to the second shallow groove 12B. In the present embodiment, the second shallow groove 12B includes an inner second shallow groove 23 located at a position overlapping the first shallow groove 12A in the tire axial direction, and an outer second shallow groove 24 located on the first tread end T1 side with respect to the inner second shallow groove 23. In the present embodiment, the outer second shallow groove 24 is located over the first portion 7 and the second portion 8. In the present embodiment, each shallow groove 12 is located on the first tread end T1 side with respect to the crown region Cr.

One end 24e on the trailing edge side in the tire rotation direction R of the outer second shallow groove 24 is located on the trailing edge side in the tire rotation direction R with respect to one end 3b on the trailing edge side in the tire rotation direction R of the first inclined groove 3. Such an outer second shallow groove 24 serves to collect a larger amount of a water film on the tread surface 2a, in the first inclined groove 3.

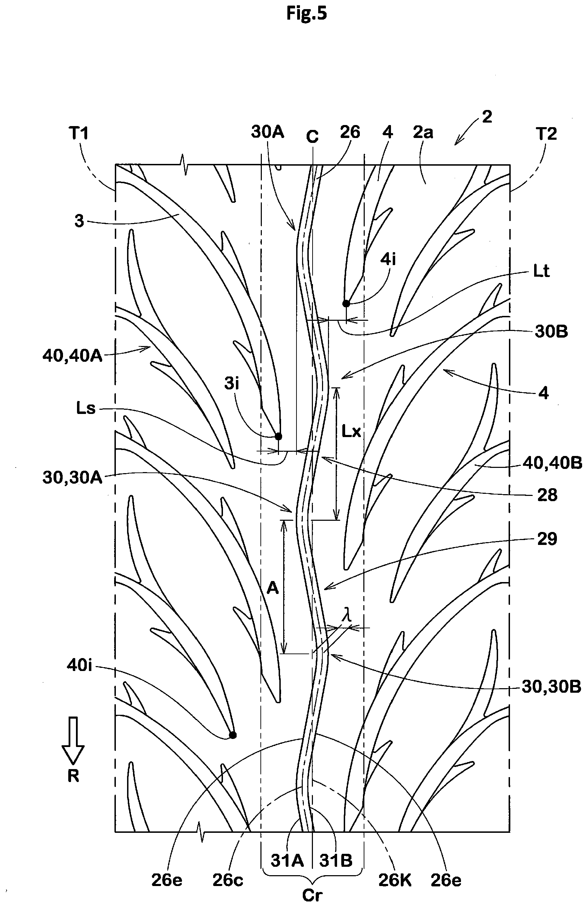

FIG. 5 is a plan view of the tread portion 2. As shown in FIG. 5, the tread portion 2 of the present embodiment is further provided with a circumferential groove 26 extending continuously in the tire circumferential direction and small inclined grooves 40 having a smaller length than the first inclined groove 3.

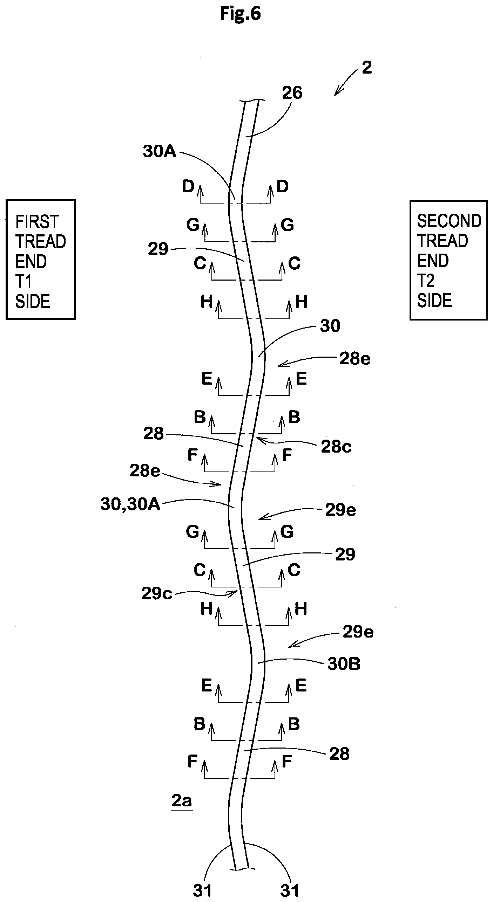

FIG. 6 is a plan view of the circumferential groove 26. As shown in FIG. 6, the circumferential groove 26 extends in a wavy shape, for example. Such a circumferential groove 26 has a larger groove volume than, for example, a circumferential groove (not shown) extending in a straight manner in the tire circumferential direction, thereby reducing the amount of water splashing. In addition, in the present embodiment, the circumferential groove 26 extends in a sinusoidal shape. Such a circumferential groove 26 makes the flow of water in the circumferential groove 26 smoother than, for example, a circumferential groove extending in a zigzag or pseudo-sinusoidal shape, thereby reducing the amount of water splashing upon contact with a wet road surface without impairing drainage performance from the tread surface 2a. Accordingly, running performance on a wet road surface is improved. The sinusoidal shape is not only a sinusoidal wave, but also includes a shape formed by waves having a plurality of different wavelengths and/or a plurality of different amplitudes.

The ratio (λ/A) of an amplitude λ to a half wavelength A (shown in FIG. 5) of the circumferential groove 26 is preferably not less than 0.04 and further preferably not less than 0.06 and is preferably not greater than 0.12 and further preferably not greater than 0.10. Since the ratio (λ/A) is not greater than 0.12, water splashing upon contact with a wet road surface can be greatly angled to the right and left sides with respect to the traveling direction. Since the ratio (λ/A) is not less than 0.04, the flow of water in the circumferential groove 26 is smoother, so that the water splashing can be suppressed. The amplitude λ and the half wavelength A are specified by a groove center line 26c of the circumferential groove 26. The groove center line 26c is specified by a location on the tread surface 2a in the tire radial direction.

The circumferential groove 26 is located, for example, in the crown region Cr. The circumferential groove 26 is preferably located on the tire equator C. In the present embodiment, a center line 26k of the amplitude of the circumferential groove 26 is located on the tire equator C. Accordingly, the water splashing during straight running, which is running at a relatively high speed, can be suppressed.

The circumferential groove 26 includes a plurality of first inclined portions 28 inclined in a first direction with respect to the tire circumferential direction, and a plurality of second inclined portions 29 inclined in a direction opposite to the first direction. The first inclined portions 28 and the second inclined portions 29 angle water splashing to the right and left sides with respect to the traveling direction upon contact with a wet road surface, thereby reducing forward water splashing. Thus, the circumferential groove 26 has a basic performance of reducing forward water splashing. In the present embodiment, the first inclined portions 28 are inclined toward the upper right side. In the present embodiment, the second inclined portions 29 are inclined toward the upper left side. The first inclined portions 28 may be inclined toward the upper left side, and the second inclined portions 29 may be inclined toward the upper right side.

The circumferential groove 26 further includes connection portions 30 connecting the first inclined portions 28 and the second inclined portions 29 adjacent to each other in the tire circumferential direction. The connection portions 30 include first connection portions 30A located on the first tread end T1 side, and second connection portions 30B located on the second tread end T2 side. The first connection portions 30A are located, for example, on the first tread end T1 side with respect to the tire equator C. The second connection portions 30B are located, for example, on the second tread end T2 side with respect to the tire equator C.

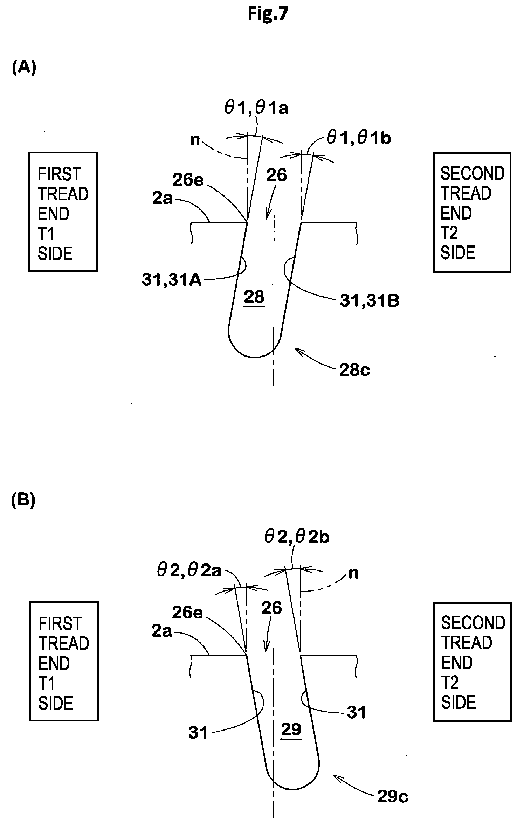

The circumferential groove 26 includes a pair of groove walls 31 extending inward in the tire radial direction from the tread surface 2a. FIG. 7(A) is a cross-sectional view taken along a line B-B in FIG. 6. FIG. 7(A) shows a groove cross-section in the tire meridional direction of each of the plurality of first inclined portions 28. As shown in FIG. 7(A), in each of the plurality of first inclined portions 28, each of the pair of groove walls 31 is inclined toward the first tread end T1 side with respect to a tread normal line n at a groove edge 26e while extending inward in the tire radial direction. FIG. 7(B) is a cross-sectional view taken along a line C-C in FIG. 6. FIG. 7(B) shows a groove cross-section in the tire meridional direction of each of the plurality of second inclined portions 29. As shown in FIG. 7(B), in each of the plurality of second inclined portions 29, each of the pair of groove walls 31 is inclined toward the second tread end T2 side with respect to a tread normal line n at the groove edge 26e while extending inward in the tire radial direction. Owing to this inclination, water splashing during running on a wet road surface can be further distributed to the right and left sides. Moreover, the first inclined portions 28 and the second inclined portions 29 each have a portion whose inclination angle with respect to the tire circumferential direction increases as the wear of the tread portion 2 progresses. Accordingly, in the end stage of wear in which the groove volume becomes small, water splashing is caused at a larger angle with respect to the traveling direction, so that forward water splashing can be suppressed over a long period of time.

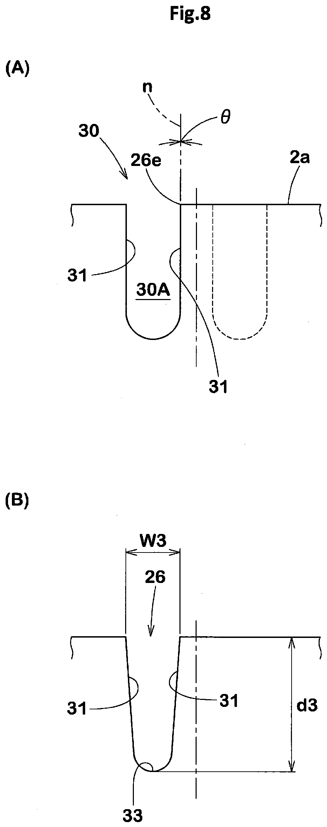

FIG. 8(A) is a cross-sectional view taken along a line D-D in FIG. 6. FIG. 8(A) shows a groove cross-section in the tire meridional direction of each of the multiple connection portions 30. FIG. 8(A) shows a groove cross-section in the tire meridional direction of the first connection portion 30A. As shown in FIG. 8(A), at the connection portion 30, the pair of groove walls 31 extend at an angle θ of 0 degrees with respect to a tread normal line n at the groove edge 26e. At the connection portion 30, the pair of groove walls 31 may extend inward in the tire radial direction in a tapered shape (shown in FIG. 8(B)). Such a connection portion 30 makes the flow of water in the first inclined portion 28 and the second inclined portion 29 smooth, thereby reducing the amount of the water splashing.

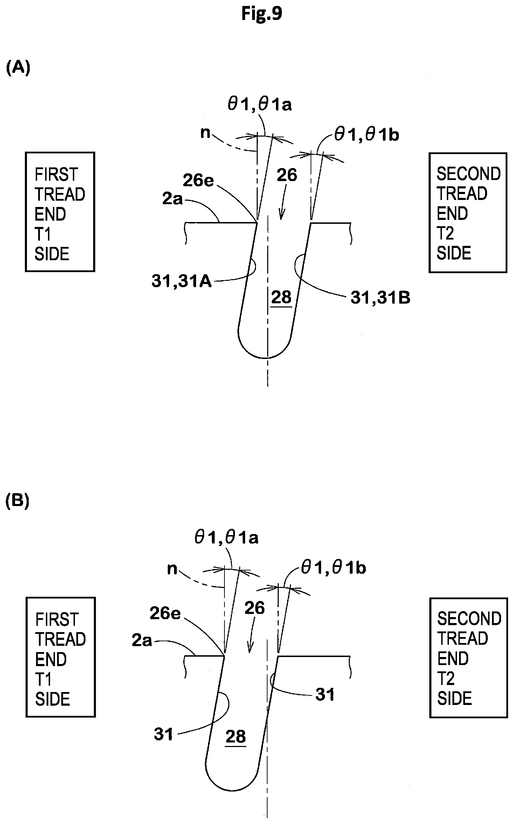

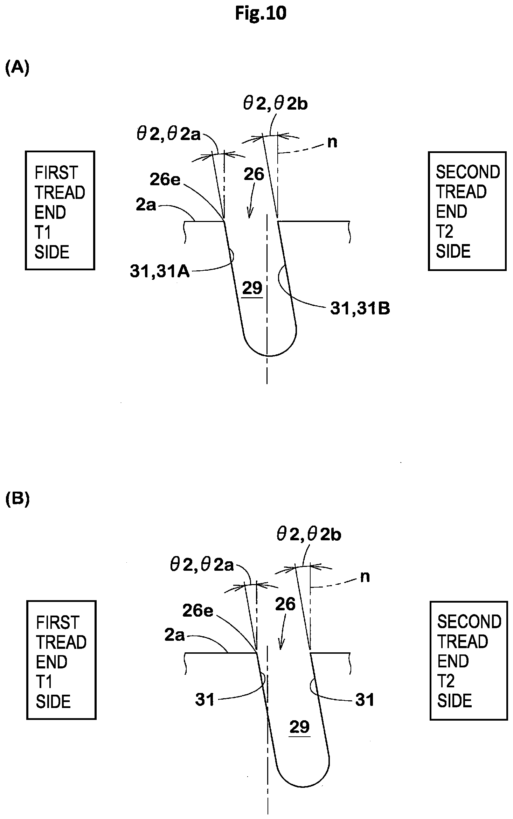

FIG. 9(A) is a cross-sectional view taken along a line E-E in FIG. 6. FIG. 9(B) is a cross-sectional view taken along a line F-F in FIG. 6. FIG. 9(A) and FIG. 9(B) each show a groove cross-section in the tire meridional direction of each of the plurality of first inclined portions 28. The cross-sections shown in FIG. 9(A) and FIG. 9(B) are cross-sections on both end 28e (connection portion 30) sides of the first inclined portion 28 with respect to an intermediate portion 28c (shown in FIG. 6) in the longitudinal direction of the first inclined portion 28. FIG. 10(A) is a cross-sectional view taken along a line G-G in FIG. 6. FIG. 10(B) is a cross-sectional view taken along a line H-H in FIG. 6. FIG. 10(A) and FIG. 10(B) each show a groove cross-section in the tire meridional direction of each of the plurality of second inclined portions 29. The cross-sections shown in FIG. 10(A) and FIG. 10(B) are cross-sections on both end 29e (connection portion 30) sides of the second inclined portion 29 with respect to an intermediate portion 29c (shown in FIG. 6) in the longitudinal direction of the second inclined portion 29.

In each of the plurality of first inclined portions 28, an angle θ1 (shown in FIG. 7(A), FIG. 9(A), and FIG. 9(B)) of each of the pair of groove walls 31 with respect to the tread normal line n is, for example, the same from one end 28e (connection portion 30) side through the intermediate portion 28c to another end 28e (connection portion 30) side of the first inclined portion 28. In addition, in each of the plurality of second inclined portions 29, an angle θ2 (shown in FIG. 7(B), FIG. 10(A), and FIG. 10(B)) of each of the pair of groove walls 31 with respect to the tread normal line n is, for example, the same from one end 29e (connection portion 30) side through the intermediate portion 29c to another end 29e (connection portion 30) side of the second inclined portion 29. Such first inclined portions 28 and second inclined portions 29 decrease the change in the inclination angles of the first inclined portions 28 and the second inclined portions 29 with respect to the tire circumferential direction in the end stage of wear to allow more water to be captured in the circumferential groove 26, thereby suppressing water splashing. In the present specification, the intermediate portion 28c of each first inclined portion 28 refers to a region, within 1/4 of a length Lx in the longitudinal direction of the first inclined portion 28, centered at the midpoint in the tire circumferential direction of the first inclined portion 28. The intermediate portion 29c of each second inclined portion 29 is also defined in the same manner.

The angle Θ1 of each of the pair of groove walls 31 with respect to the tread normal line n is maximum at least at the intermediate portion 28c in the longitudinal direction of each of the plurality of first inclined portions 28. In addition, the angle θ2 of each of the pair of groove walls 31 with respect to the tread normal line n is maximum at least at the intermediate portion 29c in the longitudinal direction of each of the plurality of second inclined portions 29. Such intermediate portions 28c and 29c effectively exhibit the above-described effects. In the present embodiment, the angle θ of each of the pair of groove walls 31 with respect to the tread normal line n changes between the cross-section along the line G-G and the cross-section along the line F-F adjacent to each other in the tire circumferential direction across the first connection portion 30A. In addition, in the present embodiment, the angle θ of each of the pair of groove walls 31 with respect to the tread normal line n changes between the cross-section along the line E-E and the cross-section along the line H-H adjacent to each other in the tire circumferential direction across the second connection portion 30B.

The maximum values of the angles θ1 and θ2 of each of the pair of groove walls 31 with respect to the tread normal line n are preferably not less than 5 degrees and further preferably not less than 7 degrees, and are preferably not greater than 15 degrees and further preferably not greater than 13 degrees. Since the maximum values of the angles θ1 and θ2 are not less than 5 degrees, water splashing can be caused at a greater angle with respect to the traveling direction in the end stage of wear. Since the maximum values of the angles θ1 and θ2 are not greater than 15 degrees, the change in the stiffness of the tread portion 2 around the circumferential groove 26 can be maintained small. In addition, since the maximum values of the angles θ1 and θ2 are not greater than 15 degrees, damage caused by pulling from a mold (not shown) for producing the tire 1 is suppressed.

As shown in FIG. 5, each first connection portion 30A is located, for example, on the tire equator C side with respect to the inner end 3i of the first inclined groove 3. In other words, in the present embodiment, the respective inner ends 3i of the plurality of first inclined grooves 3 are located on the first tread end T1 side with respect to the multiple first connection portions 30A. In addition, each second connection portion 30B is located, for example, on the tire equator C side with respect to an inner end 4i of the second inclined groove 4. In other words, in the present embodiment, the respective inner ends 4i of the plurality of second inclined grooves 4 are located on the second tread end T2 side with respect to the multiple second connection portions 30B. Accordingly, an excessive decrease in the stiffness of the tread portion 2 is suppressed, so that occurrence of uneven wear can be suppressed. In addition, the split position of the mold (not shown) for producing the tire 1 can be located between the circumferential groove 26 and the first inclined grooves 3 or the second inclined grooves 4, so that groove bottom cracking (not shown) which occurs due to the split position intersecting the grooves can be suppressed. Although not particularly limited, a length Ls in the tire axial direction between the inner end 3i and the first connection portion 30A (groove edge 26e) is preferably not less than 5% and further preferably not less than 7% of the tread development half width TW, and is preferably not greater than 15% and further preferably not greater than 13% of the tread development half width TW. In addition, a length Lt in the tire axial direction between the inner end 4i and the second connection portion 30B (groove edge 26e) is preferably not less than 5% and further preferably not less than 7% of the tread development half width TW, and is preferably not greater than 15% and further preferably not greater than 13% of the tread development half width TW.

In the present embodiment, each first inclined portion 28 is adjacent to the inner end 3i of the first inclined groove 3. In other words, the respective inner ends 3i of the plurality of first inclined grooves 3 are located adjacent to the plurality of first inclined portions 28 in the tire axial direction. In the present embodiment, each inner end 3i is adjacent to the first inclined portion 28 rather than the second inclined portion 29. As shown in FIG. 7(A), FIG. 9(A), and FIG. 9(B), the pair of groove walls 31 of each first inclined portion 28 are inclined toward the first tread end T1 side. Accordingly, it is easier for the tread surface 2a of the tread portion 2 between the first inclined portion 28 and the inner end 3i to move, and the load generated at the inner end 3i can be distributed and reduced, so that occurrence of local wear can be suppressed. In addition, wear of the tread surface 2a adjacent to the second groove wall 31B on the second tread end T2 side of the first inclined portion 28 is promoted due to concentration of a load thereon. Therefore, the difference between the amounts of wear on both sides in the tire axial direction of the first inclined portion 28 is reduced, so that uneven wear resistance can be improved.

In addition, in the present embodiment, each second inclined portion 29 is adjacent to the inner end 4i of the second inclined groove 4. In other words, the respective inner ends 4i of the plurality of second inclined grooves 4 are located adjacent to the plurality of second inclined portions 29 in the tire axial direction. In the present embodiment, each inner end 4i is adjacent to the second inclined portion 29 rather than the first inclined portion 28. As shown in FIG. 7(B), FIG. 10(A), and FIG. 10(B), the pair of groove walls 31 of each second inclined portion 29 are inclined toward the second tread end T2 side while extending inward in the tire radial direction. Accordingly, as described above, the difference between the amounts of wear of the tread surface 2a on both sides of the second inclined portion 29 is reduced.

The pair of groove walls 31 of the circumferential groove 26 include a first groove wall 31A on the first tread end T1 side and a second groove wall 31B on the second tread end T2 side. As shown in FIG. 7(A), FIG. 9(A), and FIG. 9(B), in the transverse cross-section of each first inclined portion 28 along a tire meridian, an angle θ1a of the first groove wall 31A with respect to the tread normal line n is preferably the same (same absolute value) as an angle θ1b of the second groove wall 31B with respect to the tread normal line n. In addition, as shown in FIG. 7(B), FIG. 10(A), and FIG. 10(B), in the transverse cross-section of each second inclined portion 29 along a tire meridian, an angle θ2a of the first groove wall 31A with respect to the tread normal line n is preferably the same (same absolute value) as an angle θ2b of the second groove wall 31B with respect to the tread normal line n. In the transverse cross-section of each first inclined portion 28, the fact that the angles are the same includes not only the case where the absolute value |θ1a - θ1b| of the difference between the angle θ1a of the first groove wall 31A and the angle θ1b of the second groove wall 31B is 0 degrees, but also the case where the absolute value |θ1a - θ1b| is not greater than 3 degrees. Also, in the transverse cross-section of each second inclined portion 29, the fact that the angles are the same includes not only the case where the absolute value |θ2a - θ2b| of the difference between the angle θ2a of the first groove wall 31A and the angle θ2b of the second groove wall 31B is 0 degrees, but also the case where the absolute value |θ2a - θ2b| is not greater than 3 degrees. In the transverse cross-section of each first inclined portion 28 along the tire meridian, the first groove wall 31A and the tread surface 2a form an acute angle, and the second groove wall 31B and the tread surface 2a form an obtuse angle. In the transverse cross-section of each second inclined portion 29 along the tire meridian, the first groove wall 31A and the tread surface 2a form an obtuse angle, and the second groove wall 31B and the tread surface 2a form an acute angle.

As shown in FIG. 8(B), the circumferential groove 26 further includes a groove bottom portion 33 connected to the pair of groove walls 31. The pair of groove walls 31 extend in a straight manner, for example. The straight manner includes not only extending straight in the groove cross-section in the tire meridional direction, but also extending in an arc having a radius of curvature of 100 mm or more. The groove bottom portion 33 includes a groove bottom having a maximum groove depth, and is formed in an arc shape in the present embodiment. Such a groove bottom portion 33 makes the flow of water in the circumferential groove 26 smoother, and also distributes stress generated at the groove bottom, thereby suppressing occurrence of groove bottom cracking. The arc shape includes not only an arc having a single radius of curvature, but also a shape formed by an arc forming the groove bottom and a pair of arcs connected to both ends of this arc and having a smaller radius of curvature than the arc at the groove bottom (not shown). The arc forming the groove bottom may be straight.

A groove width W3 of such a circumferential groove 26 is, for example, preferably not less than 2% and further preferably not less than 3% of the tread development half width TW, and is preferably not greater than 7% and further preferably not greater than 6% of the tread development half width TW. A groove depth d3 of the circumferential groove 26 is, for example, preferably not less than 1.1 times and further preferably not less than 1.5 times the groove width W3, and is preferably not greater than 3.5 times and further preferably not greater than 3.0 times the groove width W3.

As shown in FIG. 5, the small inclined grooves 40 include a plurality of first small inclined grooves 40A extending from the crown region Cr toward the first tread end T1 side, and a plurality of second small inclined grooves 40B extending from the crown region Cr toward the second tread end T2 side. In the present embodiment, the second small inclined grooves 40B each have the same shape as a shape obtained by inverting the first small inclined groove 40A at the tire equator C (line-symmetrical shape). Therefore, in the present specification, the first small inclined grooves 40A will be described as a representative, and for the second small inclined grooves 40B, the configuration different from that of the first small inclined grooves 40A will be described.

Each first small inclined groove 40A has an inner end 40i located on the first tread end T1 side with respect to the inner end 3i of the first inclined groove 3, and is open at the first tread end T1. The first small inclined groove 40A extends toward the first tread end T1 side while extending toward the trailing edge side in the tire rotation direction R.

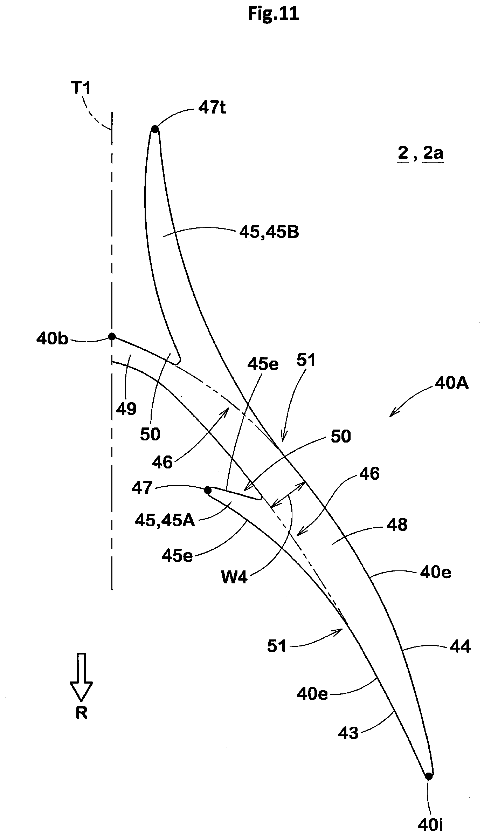

FIG. 11 is a plan view of the first small inclined groove 40A. As shown in FIG. 11, the first small inclined groove 40A has, for example, a pair of groove edges 40e extending from the inner end 40i to the first tread end T1. The pair of groove edges 40e include a leading-edge-side small groove edge 43 located on the leading edge side in the tire rotation direction R, and a trailing-edge-side small groove edge 44 located on the trailing edge side in the tire rotation direction R.

In the present embodiment, the first small inclined groove 40A includes a first portion 48 in which a groove width W4 decreases toward the first tread end T1 side, and a second portion 49 in which the groove width W4 increases toward the first tread end T1, up to the first tread end T1. The first portion 48 reduces the amount of slippage on the outer side in the tire axial direction, where the amount of slippage tends to be larger, and decreases the difference between the amounts of wear occurring on both sides in the groove width direction of the first portion 48, thereby improving uneven wear resistance. The second portion 49 makes drainage from the first tread end T1 smooth, so that wet performance can be maintained.

The tread portion 2 also includes at least one small shallow groove 45 connected to each first small inclined groove 40A. The small shallow groove 45 is formed with a groove depth smaller than the groove depth (not shown) of the first small inclined groove 40A. In the present embodiment, the small shallow groove 45 has an opening 46 connected to the first small inclined groove 40A, and one end 47 located on the most trailing edge side in the tire rotation direction R. The small shallow groove 45 extends, for example, from the opening 46 toward the first tread end T1 side while extending toward the trailing edge side in the tire rotation direction R.

The tread surface 2a of the tread portion 2 includes an acute angle portion 50 sandwiched between one of the groove edges 40e of the first small inclined groove 40A and one of a pair of groove edges 45e of the small shallow groove 45. The tread surface 2a of the tread portion 2 also includes an obtuse angle portion 51 sandwiched between one of the groove edges 40e of the first small inclined groove 40A and one of the pair of groove edges 45e of the small shallow groove 45. In the present embodiment, the acute angle portion 50 is defined by the groove edge 45e on the trailing edge side in the tire rotation direction R. In the present embodiment, the obtuse angle portion 51 is defined by the groove edge 45e on the leading edge side in the tire rotation direction R.

The small shallow groove 45 includes a first small shallow groove 45A connected to the leading-edge-side small groove edge 43, and a second small shallow groove 45B connected to the trailing-edge-side small groove edge 44. The first small shallow groove 45A is located on the inner end 40i side (leading edge side in the tire rotation direction R) with respect to the second small shallow groove 45B. One end 47t on the trailing edge side in the tire rotation direction R of the second small shallow groove 45B is located on the trailing edge side in the tire rotation direction R with respect to one end 40b on the trailing edge side in the tire rotation direction R of the first small inclined groove 40A. Such a second small shallow groove 45B serves to collect a larger amount of a water film on the tread portion 2, in the first small inclined groove 40A.

The land ratio of the tread portion 2 is preferably not less than 75% and further preferably not less than 80%, and is preferably not greater than 95% and further preferably not greater than 90%. Since the land ratio is not less than 75% and since the land ratio is not greater than 95%, in the present specification, the land ratio is indicated as the ratio (A2/A1) of an area A2 of the tread surface 2a to an area A1 of a virtual tread surface obtained by filling all grooves on the tread portion 2.

Although the particularly preferred embodiment of the present invention has been described in detail above, the present invention is not limited to the above-described embodiment, and various modifications can be made to implement the present invention.

### EXAMPLES

Motorcycle tires having the basic pattern in FIG. 1 were produced as test tires on the basis of specifications in Table 1. Then, the test tires were tested for wet performance, dry performance, uneven wear resistance, and life performance. The test methods and common specifications for each test tire are as follows.
Tire size: 100/90-10

### <Wet Performance and Dry Performance>

The respective test tires were mounted to the front and rear wheels of a motorcycle. A test rider rode this motorcycle on test courses having a wet road surface and a dry asphalt road surface. Both performances were evaluated based on sensory evaluation of the test rider, and are indicated as scores with the score of Comparative Example 1 as 100. The higher the value is, the better both performances are.
Internal pressure: 170 kPa (front), 225 kPa (rear)
Motorcycle: scooter having an engine displacement of 100 cc

### <Uneven Wear Resistance and Life Performance>

A test rider rode the above motorcycle on a dry asphalt test course. For uneven wear resistance, after the ride, the occurrence state of uneven wear was visually evaluated by a tester. The evaluation is indicated as a score with the occurrence state of uneven wear of Comparative Example 1 as 100. Also, for life performance, the estimated life of each tire was indexed from the groove depth of the circumferential groove after the end of the ride. The higher the value is, the better both performances are.

The results are shown in Table 1.

In Table 1, "A" means that each first inclined groove is inclined toward the first tread end side while extending toward the trailing edge side in the tire rotation direction, and "B" means that each first inclined groove is inclined toward the tire equator side while extending toward the trailing edge side in the tire rotation direction.

Also, in Table 1, "C" means that each shallow groove has the shape in FIG. 3, and "D" means that the portion including the one end 12t of the shallow groove is an arc.

Furthermore, in Table 1, "E" means that each shallow groove has the shape in FIG. 4, and "F" means the groove depth d2 of the shallow groove is the same from the opening 14 to the one end 12t.

In Example 7, the acute angle portion has an arc having a radius of curvature of 0.5 mm, and in Example 8, the acute angle portion has an arc having a radius of curvature of 1.5 mm.

**[Table 1]**

| | Com. Ex. 1 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| Presence/absence of opening at first tread end of first inclined groove | Presence | Presence | Presence | Presence | Presence | Presence | Presence | Presence | Presence | Presence |
| Presence/absence of first portion | Absence | Presence | Presence | Presence | Presence | Presence | Presence | Presence | Presence | Presence |
| L2/TW (%) | 0 | 10 | 15 | 10 | 10 | 10 | 10 | 10 | 10 | 10 |
| Land ratio (%) | 85 | 85 | 84 | 85 | 85 | 85 | 85 | 85 | 85 | 85 |
| Direction of inclination of first inclined groove | A | A | A | B | A | A | A | A | A | A |
| Presence/absence of shallow groove | Absence | Absence | Absence | Absence | Presence | Presence | Presence | Presence | Presence | Presence |
| Presence/absence of acute angle portion | Absence | Absence | Absence | Absence | Presence | Presence | Presence | Presence | Presence | Presence |
| Shape of shallow groove | - | - | - | - | C | C | C | C | C | D |
| Depth of shallow groove | - | - | - | - | E | E | E | E | E | F |
| Wa/W1d | - | - | - | - | 2.5 | 4.0 | 8.0 | 2.5 | 2.5 | 2.5 |
| d2a/d1 | - | - | - | - | 0.5 | 0.5 | 0.5 | 0.5 | 0.5 | 0.5 |
| Wet performance [score: higher value is better] | 100 | 105 | 110 | 95 | 110 | 115 | 110 | 110 | 110 | 110 |
| Dry performance [score: higher value is better] | 100 | 105 | 105 | 105 | 110 | 105 | 100 | 110 | 110 | 110 |
| Uneven wear resistance [score: higher value is better] | 100 | 115 | 115 | 120 | 120 | 120 | 105 | 120 | 115 | 100 |
| Life performance [index: higher value is better] | 100 | 110 | 110 | 115 | 110 | 110 | 105 | 110 | 110 | 110 |

As a result of the tests, it is understood that the tire of each Example has better uneven wear resistance, while maintaining wet performance, than the tire of Comparative Example 1. It is also confirmed that the tire of each Example has high dry performance and life performance.

### [Additional Note]

The present invention includes the following aspects.

### [Present Invention 1]

A motorcycle tire including a tread portion, wherein
the tread portion is provided with a plurality of first inclined grooves which are open from a crown region including a tire equator to a first tread end, and
each of the plurality of first inclined grooves includes a first portion in which a groove width decreases from the crown region toward the first tread end side, and a second portion in which the groove width increases toward the first tread end, up to the first tread end.

### [Present Invention 2]

The motorcycle tire according to Present Invention 1, wherein a length in a tire axial direction of the second portion is 5% to 15% of a tread development half width.

### [Present Invention 3]

The motorcycle tire according to Present Invention 1 or 2, wherein a length in the tire axial direction of the first portion is 50% to 75% of the tread development half width.

### [Present Invention 4]

The motorcycle tire according to any one of Present Inventions 1 to 3, wherein
the tread portion has a designated tire rotation direction, and
each of the plurality of first inclined grooves extends toward the first tread end side while extending toward a trailing edge side in the tire rotation direction.

### [Present Invention 5]

The motorcycle tire according to any one of Present Inventions 1 to 4, wherein the tread portion includes at least one shallow groove connected to the first inclined groove.

### [Present Invention 6]

The motorcycle tire according to Present Invention 5, wherein
the shallow groove includes an opening connected to the first inclined groove, and
a groove depth of the shallow groove decreases with increasing distance from the first inclined groove.

### [Present Invention 7]

The motorcycle tire according to Present Invention 6, wherein
the shallow groove has a groove width parallel to an opening width of the opening, and
the groove width of the shallow groove decreases with increasing distance from the first inclined groove.

### [Present Invention 8]

The motorcycle tire according to any one of Present Inventions 5 to 7, wherein
the shallow groove includes a pair of groove edges connected to a groove edge of the first inclined groove, and
the groove edge of the first inclined groove and each of the pair of groove edges of the shallow groove are connected to each other by an arc.

### [Present Invention 9]

The motorcycle tire according to Present Invention 8, wherein
a tread surface of the tread portion includes an acute angle portion sandwiched between the one groove edge of the first inclined groove and one of the pair of groove edges of the shallow groove, and
a radius of curvature of the arc at the acute angle portion is 0.5 to 1.5 mm.

### [Present Invention 10]

The motorcycle tire according to Present Invention 9, wherein
the tread portion has a designated tire rotation direction,
the pair of groove edges of the shallow groove include a first groove edge located on a trailing edge side in the tire rotation direction, and
the first groove edge defines the acute angle portion.

### [Present Invention 11]

The motorcycle tire according to any one of Present Inventions 6 to 10, wherein a maximum groove depth of the shallow groove is 0.3 to 0.7 times a groove depth of the first inclined groove at a position of the opening.

### [Present Invention 12]

The motorcycle tire according to Present Invention 7, wherein the opening width is 1 to 4 times the groove width of the first inclined groove at a position of the opening.

### [Present Invention 13]

The motorcycle tire according to any one of Present Inventions 5 to 12, wherein
the tread portion has a designated tire rotation direction,
the first inclined groove includes a leading-edge-side inclined groove edge located on a leading edge side in the tire rotation direction, and a trailing-edge-side inclined groove edge located on a trailing edge side in the tire rotation direction, and
the shallow groove includes a first shallow groove connected to the leading-edge-side inclined groove edge, and a second shallow groove connected to the trailing-edge-side inclined groove edge.

### [Present Invention 14]

The motorcycle tire according to any one of Present Inventions 1 to 13, wherein the tread portion is further provided with a plurality of second inclined grooves which are open from the crown region to a second tread end.

### [Present Invention 15]

The motorcycle tire according to any one of Present Inventions 1 to 14, wherein a land ratio of the tread portion is 75% to 95%.

## Claims

1. A motorcycle tire (1) comprising a tread portion (2), wherein
the tread portion (2) is provided with a plurality of first inclined grooves (3) which are open from a crown region (Cr) including a tire equator (C) to a first tread end (T1), and
each of the plurality of first inclined grooves (3) includes a first portion (7) in which a groove width (W1) decreases from the crown region (Cr) toward the first tread end (T1) side, and a second portion (8) in which the groove width (W1) increases toward the first tread end (T1), up to the first tread end (T1).

2. The motorcycle tire (1) according to claim 1, wherein a length in a tire axial direction of the second portion (8) is 5% to 15% of a tread development half width (TW).

3. The motorcycle tire (1) according to claim 1 or 2, wherein a length in the tire axial direction of the first portion (7) is 50% to 75% of the tread development half width (TW).

4. The motorcycle tire (1) according to any one of claims 1 to 3, wherein
the tread portion (2) has a designated tire rotation direction (R), and
each of the plurality of first inclined grooves (3) extends toward the first tread end (T1) side while extending toward a trailing edge side in the tire rotation direction (R).

5. The motorcycle tire (1) according to any one of claims 1 to 4, wherein the tread portion (2) includes at least one shallow groove (12) connected to the first inclined groove (3).

6. The motorcycle tire (1) according to claim 5, wherein
the shallow groove (12) includes an opening (14) connected to the first inclined groove (3), and
a groove depth (d2) of the shallow groove (12) decreases with increasing distance from the first inclined groove (3).

7. The motorcycle tire (1) according to claim 6, wherein
the shallow groove (12) has a groove width (W2) parallel to an opening width (Wa) of the opening (14), and
the groove width (W2) of the shallow groove (12) decreases with increasing distance from the first inclined groove (3).

8. The motorcycle tire (1) according to any one of claims 5 to 7, wherein
the shallow groove (12) includes a pair of groove edges (12e) connected to a groove edge (3e) of the first inclined groove (3), and
the groove edge (3e) of the first inclined groove (3) and each of the pair of groove edges (12e) of the shallow groove (12) are connected to each other by an arc (18).

9. The motorcycle tire (1) according to claim 8, wherein
a tread surface of the tread portion (2) includes an acute angle portion (20) sandwiched between the one groove edge (3e) of the first inclined groove (3) and one of the pair of groove edges (12e) of the shallow groove (12), and
a radius of curvature (r1) of the arc (18) at the acute angle portion (20) is 0.5 to 1.5 mm.

10. The motorcycle tire (1) according to claim 9, wherein
the tread portion (2) has a designated tire rotation direction (R),
the pair of groove edges (12e) of the shallow groove (12) include a first groove edge (12a) located on a trailing edge side in the tire rotation direction (R), and
the first groove edge (12a) defines the acute angle portion (20).

11. The motorcycle tire (1) according to any one of claims 6 to 10, wherein a maximum groove depth (d2a) of the shallow groove (12) is 0.3 to 0.7 times a groove depth (d1) of the first inclined groove (3) at a position of the opening (14).

12. The motorcycle tire (1) according to claim 7, wherein the opening width (Wa) is 1 to 4 times the groove width (W1) of the first inclined groove (3) at a position of the opening (14).

13. The motorcycle tire (1) according to any one of claims 5 to 12, wherein
the tread portion (2) has a designated tire rotation direction (R),
the first inclined groove (3) includes a leading-edge-side inclined groove edge (11A) located on a leading edge side in the tire rotation direction (R), and a trailing-edge-side inclined groove edge (11B) located on a trailing edge side in the tire rotation direction (R), and
the shallow groove (12) includes a first shallow groove (12A) connected to the leading-edge-side inclined groove edge (11A), and a second shallow groove (12B) connected to the trailing-edge-side inclined groove edge (11B).

14. The motorcycle tire (1) according to any one of claims 1 to 13, wherein the tread portion (2) is further provided with a plurality of second inclined grooves (4) which are open from the crown region (Cr) to a second tread end (T2).

15. The motorcycle tire (1) according to any one of claims 1 to 14, wherein a land ratio of the tread portion (2) is 75% to 95%.
